# EUROPEAN PATENT SPECIFICATION

(11) **EP 4 072 843 B1**
(45) Date of publication and mention of the grant of the patent: **07.02.2024**
(21) Application number: 20838600.3
(22) Date of filing: 27.11.2020
(51) Int. Cl.: B29D 30/24, B29D 30/26, B29D 30/20

(54) **ASSEMBLY MACHINE FOR MANUFACTURING TYRES FOR VEHICLE WHEELS, AND PROCESS FOR REPLACING FORMING DRUMS IN AN ASSEMBLY MACHINE**
MONTAGEMASCHINE ZUR HERSTELLUNG VON REIFEN FÜR FAHRZEUGRÄDER UND VERFAHREN ZUM ERSATZ VON FORMTROMMELN IN EINER MONTAGEMASCHINE
MACHINE D'ASSEMBLAGE POUR FABRICATION DE PNEUMATIQUES POUR ROUES DE VÉHICULE, ET PROCÉDÉ DE REMPLACEMENT DES TAMBOURS DE FORMATION DANS UNE MACHINE D'ASSEMBLAGE

(30) Priority: 12.12.2019 IT 201900023718
(43) Date of publication of application: 19.10.2022
(73) Proprietor: Pirelli Tyre S.p.A., 20126 Milano (IT)
(72) Inventor: DE COL, Christian, 20126 Milano (IT); PORTINARI, Gianni Enrico, 20126 Milano (IT); TESTI, Stefano, 20126 Milano (IT)
(74) Representative: Tansini, Elio Fabrizio
(86) International application number: PCT/IB2020/061229
(87) International publication number: WO 2021/116814

(56) References cited:
- WO-A1-2005/011967
- WO-A2-2018/111091
- JP-A- 2001 232 693

## Description

The present invention relates to an assembling machine for building tyres for vehicle wheels, and a process for replacing shaping drums in an assembling machine of tyres for vehicle wheels.

A tyre for vehicle wheels generally comprises a carcass structure comprising at least one carcass ply having respectively opposite end flaps engaged with respective anchoring annular structures, integrated in the zones normally identified with the name "beads", having an inner diameter substantially corresponding to a so-called "fitting diameter" of the tyre on a respective mounting rim.

The carcass structure is associated with a belt structure which can comprise one or more belt strips/layers, situated in radial superimposition with respect to each other and with respect to the carcass ply, having textile or metallic reinforcement cords with cross orientation and/or orientation substantially parallel to the circumferential extension direction of the tyre (at 0 degrees). In radially outer position with respect to the belt structure, a tread band is applied, also made of elastomeric material like constituent semifinished products of the tyre.

Respective sidewalls made of elastomeric material are also applied in axially outer position on the lateral surfaces of the carcass structure, each extended from one of the lateral edges of the tread band up to the respective anchoring annular structure to the beads. In the tyres of "tubeless" type, an airtight covering layer, usually termed "liner", covers the inner surfaces of the tyre.

The building of a green tyre can essentially provide that the carcass ply/plies, the anchoring annular structures and/or other components of the carcass structure are made and/or, where previously produced as semifinished products, mutually assembled on a building drum, in order to form the carcass structure in the shape of a so-called "carcass sleeve" having substantially cylindrical shape.

The carcass sleeve is then shaped according to a toroidal configuration, in order to be coupled with a so-called "outer sleeve", previously obtained by making and/or assembling together the belt strips, the tread band and/or other components.

Following the building of the green tyre, a moulding and vulcanisation treatment is generally performed which is aimed to determine the structural stabilisation of the tyre by means of cross-linking of the elastomeric compositions, as well as to impart on the same, if required, a desired tread design and possible distinctive graphic marks at the sidewalls of the tyre.

By "elastomeric material" it is intended to indicate a composition comprising at least one elastomeric polymer and at least one reinforcement filler. Such composition can also comprise additives such as, for example, a cross-linking agent and/or a plasticising agent. Due to the presence of the cross-linking agent, such material can be cross-linked by means of heating, so as to form the final manufactured item.

The term "radial" and the expression "radially inner/outer" are used with reference to the radial direction of the devices used (e.g. drums, machines) and/or of the tyre, i.e. to a direction substantially perpendicular to the rotation axis or central axis of the devices used/tyre.

The term "axial" and the expression "axially inner/outer" are used with reference to the axial direction of the devices used (e.g. drums, machines) and/or of the tyre, i.e. to a direction parallel to the rotation axis or central axis of the devices used/tyre.

The terms "circumferential" and "circumferentially" are used with reference to the annular extension of the devices used or of the tyre.

By "shaping drum" it is intended to indicate a drum arranged to receive the previously-built carcass sleeve, and provided with two half parts, each arranged to engage one of the beads and to be axially approachable in order to shape the carcass sleeve according to a toroidal configuration.

Where referred to a central shaft of a shaping drum, the expressions "proximal end" and "distal end" indicate the ends of the shaft respectively closer and further away from a bearing unit of an assembling machine which supports said shaping drum.

WO2010/070374, in the name of the same Applicant, describes a plant for producing tyres of different sizes, in which a carcass building line and a crown structure building line are provided, converging in an assembly station. Along the carcass building line, forming drums are sequentially transferred between a plurality of first work stations set to apply the various components of the carcass structure on each of the forming drums. Auxiliary drums are in turn sequentially transferred between a plurality of second work stations distributed along the crown structure building line, for the application of the various components of the crown structure on each of the forming drums. The assembly station comprises shaping devices directly couplable with the forming drum carrying the previously-formed carcass sleeve thereon, in order to toroidally shape the carcass sleeve and couple it to the crown structure previously removed from the auxiliary drum.

WO2015/181654 describes an apparatus for building tyres in which a previously-made carcass sleeve is transferred onto a shaping apparatus having two half parts coaxially movable with respect to each other and configured for engaging the carcass sleeve at the respective beads. Between the half parts, a forming drum is engaged which is expandable within the carcass sleeve during the shaping thereof. Upon completed shaping, the forming drum carrying the carcass sleeve is adapted to be removed from the shaping apparatus in order to be transferred to devices which make the crown structure by means of application of elementary components directly on the shaped carcass sleeve.

WO2005/011967, in the name of the same Applicant, describes a method in which the carcass structure of a tyre is made on a drum having a proximal half part and a distal half part, mutually approachable in order to determine a radial expansion of the carcass ply up to bringing it against a belt structure supported by a transfer member. The proximal half part is axially integral with a support structure carried by a robotic arm of a movement group, which transmits an axial movement to the proximal half part, while the distal half part shifts according to a stroke of double extent with respect to the stroke transmitted by the robotic arm. The robotic arm transfers the drum to a unit for dispensing an elongated element in order to make a tread band on the belt structure and/or a pair of sidewalls in axially outer positions with respect to the carcass structure.

In the tyre production field, the Applicant has observed an increasing request to balance, on one hand, the need to be able to vary the production between different medium/small batches of tyres in particular with high and ultra-high performances, and on the other hand the need to maintain the cycle time and consequently the production costs at levels compatible with the market needs.

Production processes of the type of those illustrated in WO2015/181654 do not suggest solutions that are particularly advantageous in the case of the aforesaid frequent size change of the tyres being processed, due to the downtimes for the replacement of the respective equipment.

The production solution used in plants of the type of those described in the document WO2010/070374 resolves the abovementioned problem, but with overall unit costs per tyre produced that are rather high and not always compatible with the business logic of the market.

The implementation of production methods of the type described in WO2005/011967 requires that each drum be equipped for performing the carcass structure building operations, and for shaping the carcass structure for the purposes of the coupling with the belt structure. This involves relatively high production costs, also deriving from the need to employ particularly complex and bulky machinery in the attainment and application of the components of the tyres and for moving drums. The need to manipulate the forming drums having considerably high weigh and bulk also makes it difficult to obtain satisfactory precision in the coupling between the carcass sleeve and the belt structure when the drum is supported and moved by the robotic arm.

The Applicant has thus perceived the possibility to balance the opposed needs of maintaining limited costs with equal quality levels in the presence of frequent size changes of the tyres being processed, limiting the impact of such changes on the productivity and on the processing costs, by using an assembling machine equipped with an interchangeable shaping drum configured for engaging the previously-produced carcass sleeve. In the perception of the Applicant, the use of a pre-built carcass sleeve also allows simplifying and lightening the structure of the shaping drum, since the components necessary for performing the operations required during the attainment of the carcass sleeve do not have to be present on board the shaping drum.

The Applicant has finally found that by arranging an assembling machine equipped with two or more different shaping drums individually engageable with a bearing assembly with the aid of a manipulator, the same bearing assembly can be simplified and conveniently mounted on a stationary structure, and each shaping drum can be easily replaced in brief times, each time with drums of different size, without requiring the use of particular additional equipment with respect to that already provided for in the plant for production purposes. The structure of the shaping drums and of the bearing assembly will be simplified, and the precision of positioning of the carcass sleeve during the coupling with the outer sleeve will be improved.

More particularly, in accordance with a first aspect, the invention relates to a process for replacing shaping drums in an assembling machine of tyres for vehicle wheels, according to claim 1.

In accordance with a further aspect, the invention relates to an assembling machine for building tyres for vehicle wheels, according to claim 6.

The Applicant deems that the entrusting of the operation of replacing the drums to a manipulator allows entrusting the bearing assembly the sole task of transmitting the necessary axial movements to the half parts of the drum, for the benefit of the precision of the positioning of the carcass sleeve with respect to the outer sleeve during shaping. The manipulator can also be conveniently used for interacting with other parts of the plant, for example during the engagement of the outer sleeve with a annular transfer member. The bearing assembly can be conveniently provided with control members that can be interfaced with the different parts of the shaping drum in order to determine the movement thereof provided in the assembly cycle. Each drum can in turn integrate only the components set to interact on the tyre being processed, for the benefit of the structural simplification and of the weight reduction, integrated in a uniform set, disengageable from the bearing assembly without requiring the dismounting of single parts.

The cantilevered mounting of the shaping drum also offers a wide space for manoeuvring around the distal end of the central shaft, facilitating the shaping drum gripping and removal operations, as with the coupling thereof to the movable carriage.

In at least one of the aforesaid aspects, at least one convenient embodiment solution of the invention can also comprise one or more of the following preferred characteristics.

Preferably, the action of shifting the second half part of the active shaping drum along the central shaft up to the parking position is actuated by a positioning actuator forming part of the bearing assembly.

Preferably, disengaging the active shaping drum from the bearing assembly comprises disengaging the positioning actuator from the second half part of the active shaping drum in the parking position.

Preferably, disengaging the active shaping drum from the bearing assembly comprises disengaging the proximal end of the active shaping drum from the bearing assembly.

Preferably, said positioning actuator is disengaged from the second half part of the active shaping drum before disengaging the proximal end of the central shaft of the active shaping drum from the bearing assembly.

Preferably, engaging the bearing assembly with the waiting shaping drum comprises engaging, by means of said manipulator, the distal end of the central shaft of the waiting shaping drum with the respective second half part arranged in the parking position.

Preferably, engaging the bearing assembly with the waiting shaping drum comprises bringing, by means of said manipulator, the proximal end of the waiting shaping drum close to a coupling seat carried by the bearing assembly.

Preferably, engaging the bearing assembly with the waiting shaping drum comprises fixing said proximal end to the coupling seat.

Preferably, engaging the bearing assembly with the waiting shaping drum comprises engaging the positioning actuator with the second half part of the waiting shaping drum.

Preferably, engaging the bearing assembly with the waiting shaping drum comprises disengaging the manipulator from the distal end of the central shaft of the waiting shaping drum.

Preferably, an action of shifting the second half part along the central shaft from the parking position is actuated by means of said positioning actuator.

Preferably, provision is made for making a carcass sleeve comprising at least one carcass ply having axially opposite end flaps engaged with respective annular reinforcing structures.

Preferably, provision is made for making an outer sleeve comprising at least one belt structure.

Preferably, provision is made for engaging the carcass sleeve on the active shaping drum.

Preferably, provision is made for engaging the outer sleeve with a stationary annular transfer member stationary, positioned coaxially to the active shaping drum.

Preferably, provision is made for axially moving the active shaping drum, to insert the carcass sleeve in an axially centred position with respect to an axial centre line plane of the outer sleeve carried by the stationary annular transfer member.

Preferably, provision is made for subsequently moving the second half part of the active shaping drum along the central shaft towards the axial centre line plane, while the central shaft axially shifts in order to move the first half part towards the axial centre line plane.

Preferably, the second half part shifts with respect to the central shaft according to axial displacements having double extent with respect to the shifting of the first half part. In such a manner, the carcass sleeve maintains the axially centred position with respect to the outer sleeve during the mutual approaching of the half parts.

Preferably, said first half part is fixed in proximity to the distal end of the central shaft.

This expedient facilitates a positioning of the second half part at a suitable distance from the proximal end, so as to free space around the latter in order to facilitate the manoeuvres for engaging and disengaging the shaping drum with respect to the bearing assembly.

Preferably, the proximal end and the distal end of the central shaft are rigidly fixed together.

Preferably, the second half part is axially interposed between the proximal end and the distal end.

Preferably, the bearing assembly comprises a linear guide, and a carriage movable along the linear guide and configured for engaging the central shaft of the active shaping drum at the respective proximal end.

The mobility offered by the carriage and by the positioning actuator allows carrying out the axial insertion of the shaping drum in a stationary annular transfer member carrying an outer sleeve, and determining the coupling of the latter with a carcass sleeve carried by the shaping drum following a symmetric axial approaching of the half parts of the shaping drum itself, without requiring any axial movement of the stationary annular transfer member. The assembling machine is therefore compatible with the use of a stationary annular transfer member stationary, for the benefit of the precision of the coupling between the carcass sleeve and the outer sleeve.

Preferably, the positioning actuator is fixed to the carriage.

Preferably, the linear guide is extended according to a sliding direction parallel to the central shaft.

Preferably, the carriage shifts along the sliding direction.

Preferably, provision is also made for a motor drive operating between the carriage and the linear guide in order to move the carriage along the linear guide.

Preferably, the carriage is configured for positioning the active shaping drum in a working position axially centred with respect to a stationary annular transfer member.

Preferably, said stationary annular transfer member is stationary with respect to said assembling machine.

Preferably, said stationary annular transfer member is configured for engaging an outer sleeve which can be coupled around a carcass sleeve carried by the shaping drum.

Preferably, the manipulator is configured for engaging an auxiliary drum and placing it at a position coaxially centred within the stationary annular transfer member.

The same manipulator used for bringing the outer sleeve in engagement with the stationary annular transfer member is therefore conveniently used also for operating the substitution of the shaping drums.

Preferably, the central shaft of each shaping drum carries a distal flange rigidly engaging the first half part.

Preferably, the proximal end of each shaping drum is engageable with a mandrel operatively housed in the bearing assembly.

Preferably, the central shaft of each shaping drum carries a proximal flange rigidly engageable with the bearing assembly.

Preferably, the proximal end of the central shaft is engageable with the bearing assembly by means of first threaded members circumferentially distributed and operating through the proximal flange.

Preferably, each of the first threaded members has a head defining an abutment seat against the proximal flange, and a stem rotatably engaged in a through hole arranged through the proximal flange.

Preferably, each of the first threaded members is housed in a cavity defined between the proximal flange and a closing disc fixed to the proximal flange itself.

Preferably, each of the first threaded members has an operating seat accessible through an access opening obtained in the closing disc.

Preferably, each of the first threaded members is engageable with a fixing element carried by a mandrel and axially movable towards a working position in contrast to elastic return elements, upon action of the respective first threaded member.

Preferably, provision is also made for at least one sensor carried by the bearing assembly, interacting with a head enlargement of each fixing element to emit an alarm signal in the absence of the head enlargement in the working position.

Preferably, the central shaft has pneumatic activation ducts connected to the proximal end and operatively couplable with fluid dynamic couplings carried by the bearing assembly.

Preferably, the positioning actuator comprises a coupling member configured for engaging the second half part of the active shaping drum to move it along the central shaft.

Preferably, the coupling member is shiftable with respect to the carriage, parallel to the linear guide.

Preferably, the coupling member has a tubular body slidingly guided along a cylindrical support protruding cantilevered from the carriage.

Preferably, the mandrel of the bearing assembly is operatively housed in the cylindrical support.

Preferably, the coupling member comprises a terminal counter-flange operatively couplable by means of a coupling with a coupling ring carried by the second half part of the active shaping drum.

Preferably, the coupling ring is rotatably engaged with the second half part.

Preferably, said coupling comprises second threaded members circumferentially distributed and operating through respective through openings arranged in one of said terminal counter-flange and coupling ring.

Preferably, each through opening has an enlarged portion and an arched slot extended from the enlarged portion along a circumference concentric to the central shaft.

Preferably, each of said second threaded members comprises a head axially insertable through the enlarged portion of one of said through openings.

Preferably, each of said second threaded members comprises a stem engageable through the arched slot following an angular rotation of the coupling ring.

Preferably, the proximal flange has a larger diametric dimension with respect to a diametric dimension of the distal flange.

Larger dimensions of the proximal flange allow strengthening the coupling of the shaping drum with the bearing assembly and facilitate the installation of mechanical and pneumatic connection elements.

Preferably, each shaping drum also comprises at least one locking bolt operably activatable to hold the second half part in the parking position.

Preferably, the locking bolt comprises a fluid dynamic actuator operating on an insert radially movable with respect to the central shaft, between an operating position in which it is engaged in an engagement seat arranged in the central shaft, and a rest position in which it is extracted from the engagement seat.

Preferably, the fluid dynamic actuator is fixed to the second half part.

Preferably, the fluid dynamic actuator is operatively connected with one of said pneumatic ducts.

Preferably, provision is also made for an electronic control unit configured for simultaneously operating the motor drive and the positioning actuator, in order to move the second half part along the central shaft according to axial displacements having double extent and opposite direction with respect to displacements imposed on the carriage along the linear guide.

Further characteristics and advantages will be clearer from the detailed description of a preferred but not exclusive embodiment of a process for replacing shaping drums in an assembling machine of tyres for vehicle wheels, and of an assembling machine for building tyres for vehicle wheels, in accordance with the present invention. Such description will be set forth hereinbelow with reference to the enclosed drawings, given only as non-limiting examples, in which:

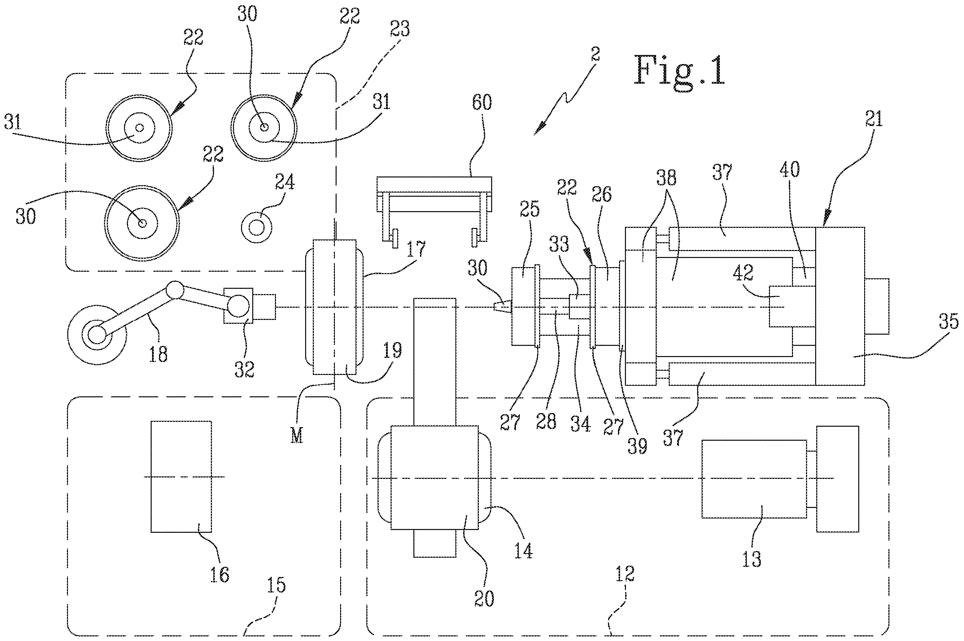

- figure 1 schematically shows, in plan view, a plant for building tyres integrating the present invention;

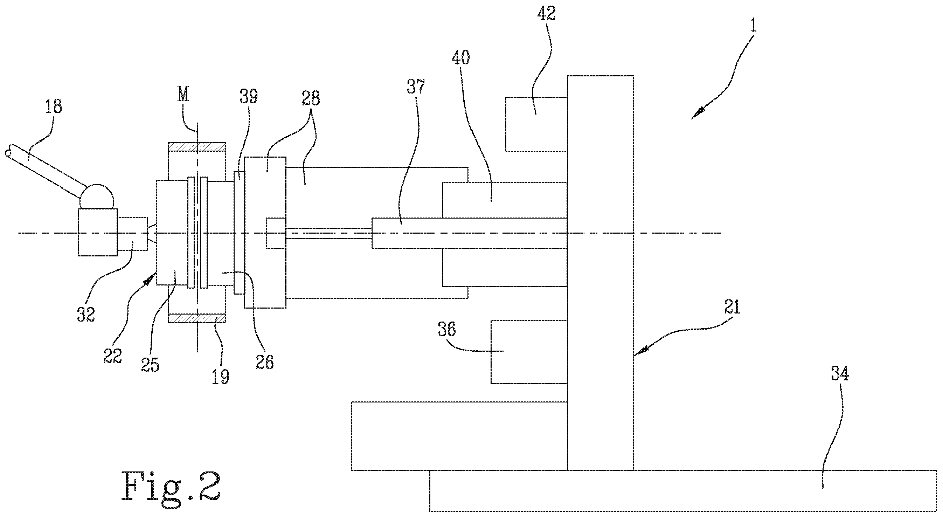

- figure 2 schematically shows, in side view, an assembling machine according to the present invention, with the half parts of the drum mutually approached in a parking position;

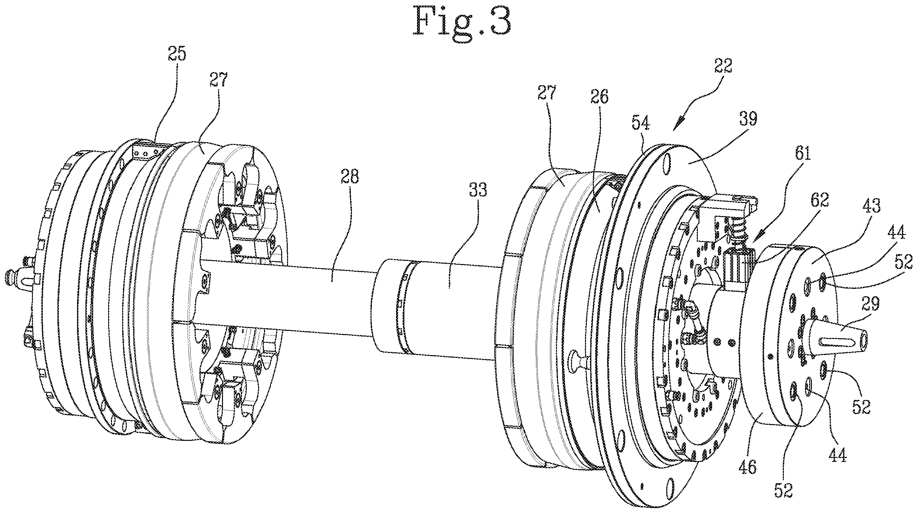

- figure 3 shows, in perspective view, a shaping drum disengaged from the assembling machine;

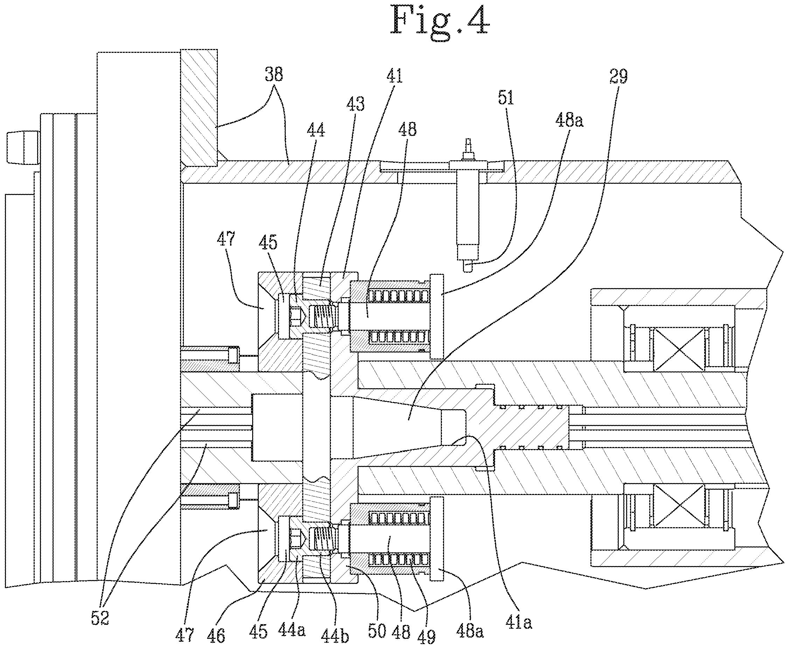

- figure 4 shows, in cross section, a detail of the proximal end of the shaping drum engaged with a mandrel of the assembling machine;

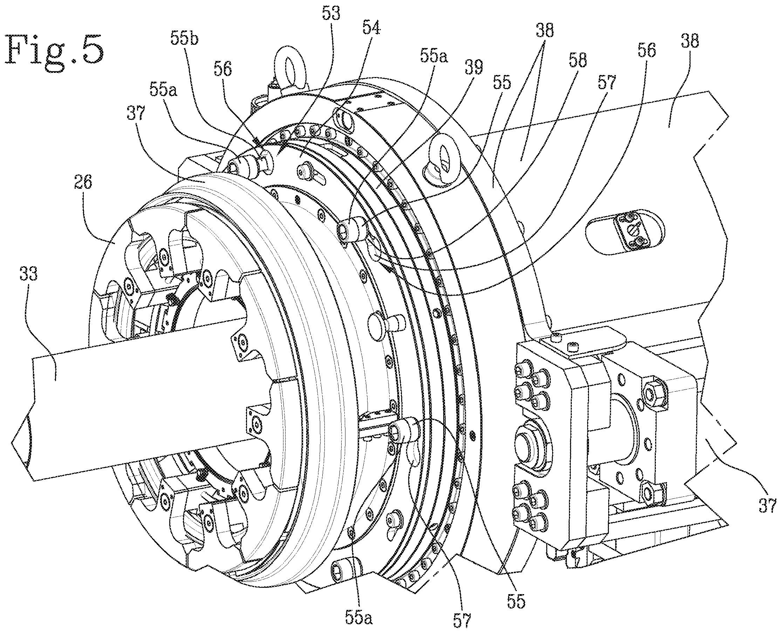

- figure 5 shows, in perspective view, a detail of the coupling for the engagement of the second half part of the shaping drum to the coupling member of the assembling machine;

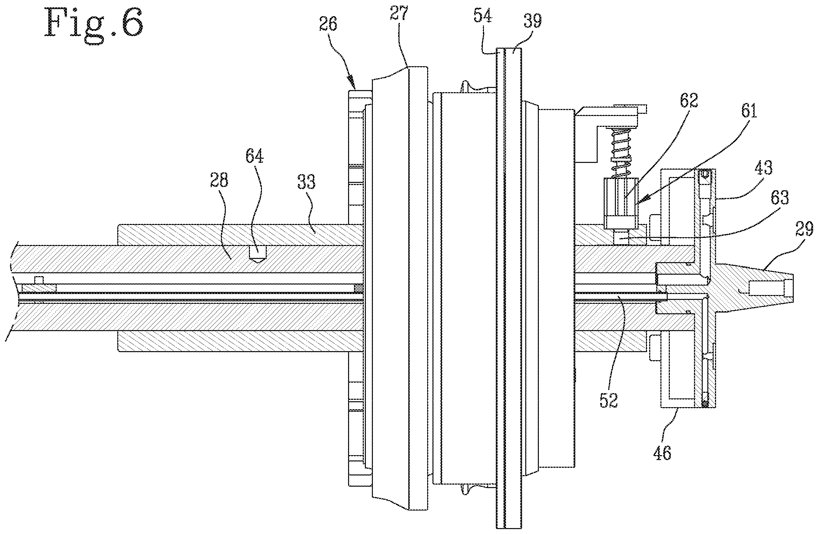

- figure 6 shows, in cross section, a detail of a bolt arranged in proximity to the proximal end of the shaping drum;
- figure 7 shows, in half cross section, a tyre obtainable in accordance with the present invention.

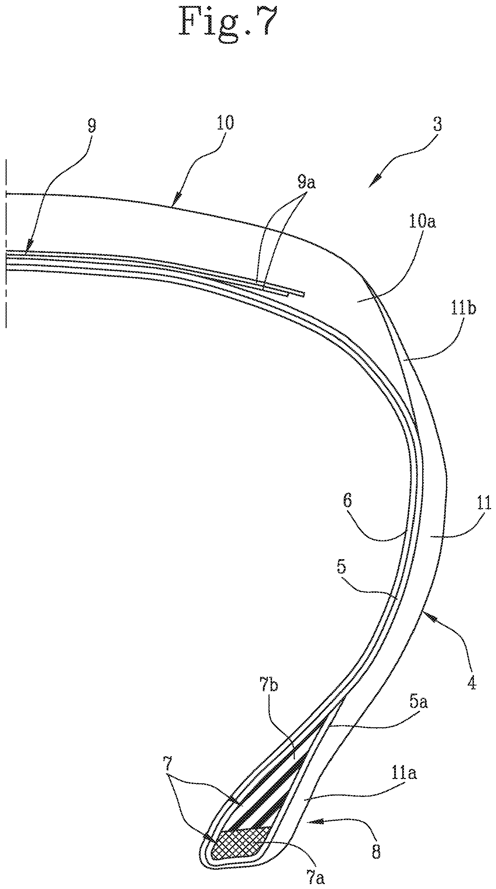

With reference to the abovementioned figures, reference number 1 overall indicates an assembling machine for building tyres for vehicle wheels, in accordance with the present invention. The assembling machine 1 operates within a plant 2 for building tyres for vehicle wheels, one example thereof is represented in figure 7 and overall indicated with 3. The tyre 3 comprises a carcass structure 4 having at least one carcass ply 5. A layer of airtight elastomeric material or so-called liner 6 can be applied inside the carcass ply/plies 5. Two annular reinforcing structures 7, each comprising a so-called bead core 7a carrying an elastomeric filler 7b in radially outer position, are engaged with respective end flaps 5a of the carcass ply/plies 5. The annular reinforcing structures 7 are integrated in proximity to zones normally identified with the name "beads" 8, at which the engagement between the tyre 3 and a respective mounting rim normally occurs.

A belt structure 9, comprising one or more belt layers 9a, is circumferentially extended around the carcass structure 4, and a tread band 10 is circumferentially superimposed on the belt structure 9.

Two sidewalls 11 are applied in laterally opposite positions on the carcass ply/plies 5. Each sidewall has a radially inner apex 11a joined to the corresponding bead 8 and a radially outer terminal portion 11b joined to an axially outer edge 10a of the tread band 10.

For the purpose of attaining the tyre 3, it can be provided that, in a carcass building area 12, one proceeds with the deposition of the liner 6, of the ply/plies and/or of other components such as at least one portion of sidewalls 11, according to known modes on at least one building drum 13, in order to obtain at least one carcass sleeve 14 in which the annular reinforcing structures 7 engage the respective end flaps 5a of the carcass ply/plies 5, turned up around them.

In an outer sleeves building area 15, on at least one auxiliary drum 16, the following can be made: at least one outer sleeve 17 comprising at least the belt structure 9 and possibly the tread band 10 applied thereon and at least one portion of sidewalls 11.

A manipulator 18 operatively associated with the assembling machine 1 picks up the auxiliary drum 16 from an outlet station of the outer sleeves building area 15, in order to place it at a position coaxially centred within a stationary annular transfer member 19, preferably stationary with respect to the assembling machine itself, configured for engaging the outer sleeve 17 and retaining it in fixed position. Upon command of the manipulator 18, the auxiliary drum 16 is radially contracted and disengaged from the sleeve itself with an axial movement, in order to then be newly introduced in the outer sleeves building area 15 and initiate the building of a new outer sleeve 17.

For the purposes of the coupling with the outer sleeve 17 retained by the stationary annular transfer member 19, the carcass sleeve 14 is in turn adapted to be removed from the building drum 13 by means of a gripping device 20, which provides to transfer it to the assembling machine 1.

The assembling machine 1 essentially comprises a bearing assembly 21 with which a plurality of shaping drums 22 are individually engageable.

Preferably, two or more shaping drums 22 are provided. Each shaping drum 22 is arranged for processing tyres 3 having different structural characteristics from those of the tyres 3 attainable by means of the other shaping drums 22. In particular, the tyres 3 respectively attainable by means of one and the other shaping drum 22 can differ from each other at least in relation to the fitting diameter, i.e. the inner diameter detectable at the beads 8.

Nearby the bearing assembly 21, a storage station 23 is arranged having a plurality of supports 24, each configured for the engagement of one of the shaping drums 22.

During the processing, an active shaping drum 22 on the bearing assembly 21, and one or more waiting shaping drums 22 in the storage station 23, are distinguishable in the plurality of shaping drums 22. The waiting shaping drums 22 are individually interchangeable with the active shaping drum 22, each time it is necessary to pass to the production of tyres 3 of different type with respect to that in production up to that moment. For such purpose, the same manipulator 18 employed for bringing the single auxiliary drums 16 in engagement with the stationary annular transfer member 19, or possibly another manipulator dedicated for such purpose, is adapted to pick up the active shaping drum 22 from the bearing assembly 21 in order to transfer it into the storage station 23, and pick up one of the waiting shaping drums 22 from the storage station 23 in order to arrange it for engagement with the bearing assembly 21, in place of the same previously-removed active shaping drum 22.

Each shaping drum 22 comprises a first half part 25 and a second half part 26 that are substantially mirrored with respect to each other, each carrying a radially expandable annular gripping element 27, situated at an axially inner and radially outer edge thereof. Each annular gripping element 27, not described in detail since not relevant for the purposes of the invention, is radially expandable for engaging, preferably in a self-centring manner, the respective bead 8 of the carcass sleeve 14 carried by the gripping device 20. The carcass sleeve 14 can thus be disengaged by the gripping device 20 and firmly retained at the beads 8 thereof during the execution of a shaping cycle for the purposes of the coupling with the outer sleeve 17.

The half parts 25, 26 are coaxially carried by a central shaft 28, having a proximal end 29 and a distal end 30 rigidly fixed together and angularly offset. The first half part 25 - being integral with one between the proximal end 29 and the distal end 30 - is integral with both ends, since these are integral with each other. For such purpose, the central shaft 28 carries, at the distal end 30, a distal flange 31 rigidly engaged with the first half part 25. The distal end 30 is preferably attained in the form of a conical shank, operatively engageable by a gripping member 32 carried by the manipulator 18 or by another manipulator dedicated for such purpose.

The second half part 26 is axially interposed between the proximal end 29 and the distal end 30, and slidingly engaged along the central shaft 28. For such purpose, the second half part 26 can be fixed to a tubular sleeve 33 slidingly engaged around the central shaft 28.

The bearing assembly 21 comprises a linear guide 34 and a carriage 35 movable along the linear guide 34. The carriage 35 is configured for engaging the central shaft 28 of the active shaping drum 22 at the respective proximal end 29, in order to support it cantilevered coaxially with respect to the stationary annular transfer member 19.

The linear guide 34, stationary, is extended according to a sliding direction parallel to the central shaft 28 of the active shaping drum 22.

A motor drive 36 operates between the linear guide 34 and the carriage 35 in order to move the latter, together with the active shaping drum 22, along the sliding direction.

The bearing assembly 21 also comprises a positioning actuator 37 configured for operating on the active shaping drum 22, in order to move the second half part 26 along the central shaft 28. The positioning actuator 37 is preferably fixed to the carriage 35, and can for example comprise a pair of electric cylinders driven by a servomotor (not illustrated), fixed on respectively opposite sides of the carriage 35 itself and operating on a coupling member 38 that is shiftable with respect to the carriage 35, parallel to the linear guide 34.

The coupling member 38 is preferably made in the form of a tubular body slidingly guided along a cylindrical support 40 protruding cantilevered from the carriage 35, parallel to the sliding direction. The coupling member 38 carries a terminal counter-flange 39, operatively couplable with the second half part 26 of the active shaping drum 22, to move it along the central shaft 28.

Within the cylindrical support 40 of the carriage 35, a mandrel 41 can be operatively housed, actuatable in rotation by a motor 42.

The engagement of the proximal end 29 with the bearing assembly 21 preferably occurs at the mandrel 41. For such purpose, it can be provided that the proximal end 29 be made in conical shank form, operatively couplable for axial insertion in a corresponding coupling seat 41a arranged in the mandrel 41, so as to facilitate the relative centring of the parts in coupling step.

On the proximal end 29 of the central shaft 28, a proximal flange 43 is installed, having preferably larger diametric dimension with respect to that of the distal flange 31.

Preferably, the proximal end 29 of the central shaft 28 is adapted to be fixed to the bearing assembly 21 by means of first threaded members 44 circumferentially distributed and operating through the proximal flange 43.

Preferably, each of the first threaded members 44 has a head 44a defining a shoulder for abutment against the proximal flange 43, and a stem 44b rotatably engaged in a through hole arranged through the proximal flange 43 itself. At least the head 44a is housed, preferably with a certain axial clearance, in a cavity 45 defined between the proximal flange 43 and a closing disc 46, removably fixed to the proximal flange 43 itself.

In the closing disc 46, access openings 47 are made which are preferably flared; through each of these openings, it is possible to insert an Allen key or other suitable tool couplable with an operating seat made on the head 44a of the respective first threaded member 44, for the purpose of the tightening and loosening operations.

Each of the first threaded members 44 is operatively engageable with a respective fixing element 48 operatively carried by the mandrel 41. Upon action of the respective first threaded member 44, each fixing element 48 is axially movable towards the proximal flange 43, opposing the action of one or more cupshaped springs or other elastic return elements 49, operating between an abutment surface 50 carried by the mandrel 41 and a head enlargement 48a of the same fixing element 48. More particularly, upon screwing the respective first threaded member 44, the fixing element 48 is movable towards a working position in which the head enlargement 48a thereof is moved close to the proximal flange 43, and the latter is stably tightened against the mandrel 41.

At least one sensor 51 carried by the bearing assembly 21, for example fixed within the tubular body of the coupling member 38, is adapted to interact with the head enlargement 48a of each fixing element 48, to emit an alarm signal in the absence of the head enlargement 48a in the working position, and/or an approval signal in the presence of the head enlargement 48a in the working position.

The proximal end 29 connects to one or more pneumatic ducts 52, made within the central shaft 28 in order to feed an operating fluid which also manages the activation of the annular gripping elements 27 carried by the first and second half part 26. Preferably, the pneumatic ducts 52 lead to an axially outer surface of the proximal flange 43. With the coupling of the proximal end 29 to the mandrel 41, one determines the connection of the pneumatic ducts 52 with respective fluid dynamic couplings arranged in the mandrel itself.

Preferably, the engagement between the second half part 26 of the active shaping drum 22 and the coupling member 38 occurs by means of a coupling 53 operating between the terminal counter-flange 39 and a coupling ring 54 terminally carried by the second half part 26 of the active shaping drum 22. Preferably, the coupling ring 54 is rotatably engaged around the second half part 26.

The coupling 53 can comprise second threaded members 55 circumferentially distributed and operating through respective through openings 56 arranged in the terminal counter-flange 39 or, as in the illustrated example, in the coupling ring 54.

Each through opening 56 has an enlarged portion 57, from which an arched slot 58 is extended, with extension along a circumference concentric to the central shaft 28.

Each of the second threaded members 55 has a respective head 55a axially insertable through the enlarged portion 57 of the respective through opening 56, and a threaded stem 55b which is screwed in the terminal counter-flange 39. The stem 55b of each of the second threaded members 55 is adapted to be engaged in the arched slot 58 following an angular rotation of the coupling ring 54, after the respective head 55a has traversed the enlarged portion 57. Upon completed rotation, the second threaded members 55 are adapted to be tightened for a stable locking of the second half part 26 to the coupling member 38.

The execution of a shaping cycle for the purposes of the assembly of the carcass sleeve 14 with the outer sleeve 17 provides that the carcass sleeve itself, carried by the gripping device 20, is engaged on the active shaping drum 22. For such purpose, the gripping device 20 positions the carcass sleeve 14 coaxially between the stationary annular transfer member 19 and the active shaping drum 22, while the carriage 35 maintains the latter in a loading position, preferably at a maximum distance from the stationary annular transfer member 19 itself.

With an axial movement of the carriage 35, the active shaping drum 22, arranged with the half parts 25, 26 in a stationing position with pre-established mutual axial distance, and with the respective annular gripping elements 27 in radially contacted condition, is axially inserted in the carcass sleeve 14. Through the pneumatic ducts 52, the radial expansion is driven of the annular gripping elements 27 in order to cause the engagement of the carcass sleeve 14 at the beads 8. The gripping device 20 can then be disengaged and moved away from the carcass sleeve 14 retained by the active shaping drum 22.

A further shifting of the carriage 35 towards the stationary annular transfer member 19 causes an axial movement of the active shaping drum 22, to insert the carcass sleeve 14 in an axially centred position with respect to an axial centre line plane M of the outer sleeve 17 carried by the stationary annular transfer member 19.

At this point the first half part 25 and the second half part 26 of the shaping drum 22 are axially moved close to each other, simultaneously with the insufflation of air or another operating fluid into the carcass sleeve 14, in order to toroidally shape it and couple it to the outer sleeve 17. This approaching is conveniently obtained by simultaneously activating the positioning actuator 37 and the motor drive 36 of the bearing assembly 21, such that the second half part 26 of the active shaping drum 22 shifts along the central shaft 28 towards the axial centre line plane M, while the entire central shaft 28 axially shifts in order to move the first half part 25 towards the same axial centre line plane M.

An electronic control unit (not illustrated) manages the actuation of the motor drive 36 and of the positioning actuator 37, and possibly of other parts of the assembling machine 1, in a manner such that the displacement completed by the second half part 26 with respect to the central shaft 28 has double extent and opposite direction with respect to the displacement simultaneously imposed on the carriage 35 with respect to the linear guide 34. This expedient facilitates the maintenance of the carcass sleeve 14 in an axially centred position with respect to the outer sleeve 17 retained by the stationary annular transfer member 19, preventing mutual axial movements thereof for the entire duration of the shaping action, for the benefit of the coupling precision.

Upon completed coupling, the stationary annular transfer member 19 can disengage the outer sleeve 17. With a shifting of the carriage 35 away from the stationary annular transfer member 19, the tyre 3 being processed retained by the shaping drum 22 is axially extracted from the stationary annular transfer member itself and brought to a roller device 60, which performs a rolling operation in order to consolidate the coupling between the outer sleeve 17 and the carcass sleeve 14, while the tyre 3 is rotated upon action of the motor 42 operating on the mandrel 41. Upon completed rolling, the tyre 3 can be removed from the active shaping drum 22 upon radial contraction of the annular gripping elements 27, in order to arrange the active shaping drum 22 for performing a new work cycle.

When it is requested to replace the active shaping drum 22 with one of the waiting shaping drums 22 in the storage station 23, the manipulator 18 positions the gripping member 32 thereof coaxially with the active shaping drum 22, and the latter is carried into an exchange position following a movement of the carriage 35 along the linear guide 34. In the exchange position, the active shaping drum 22 engages the distal end 30 with the gripping member 32 of the manipulator 18. When the active shaping drum 22 is firmly retained by the manipulator 18 at the distal end 30 thereof, the positioning actuator 37 moves the second half part 26 along the central shaft 28, bring it into a parking position of minimum distance from the first half part 25.

Each shaping drum 22 can be conveniently associated with at least one locking bolt 61 operably activatable to hold the second half part 26 in the parking position. Such locking bolt 61 can comprise a fluid dynamic actuator 62 fixed to the second half part 26 and operating on an insert 63 radially movable with respect to the central shaft 28, between an operating position in which the insert 63 is engaged in an engagement seat 64 arranged in the central shaft 28, and a rest position in which the insert 63 is extracted from the engagement seat 64, freeing the axial mobility of the second half part 26. The fluid dynamic actuator 62 can be conveniently connected with one of said pneumatic ducts 52 arranged in the central shaft 28, so as to determine the activation thereof simultaneously with the radial contraction of the annular gripping elements 27.

After the activation of the locking bolt 61, the disengagement of the active shaping drum 22 from the bearing assembly 21 can be actuated. For such purpose, provision is first made for disengaging the positioning actuator 37 from the second half part 26. This operation requires the second threaded members 55 to be loosened with the aid of the aforesaid Allen key or another suitable manual tool.

Upon completed loosening, a slight angular rotation of the coupling ring 54, which can be manually carried out by an operator, causes an axial alignment of the enlarged portions 57 of the through openings 56 with the heads 55a of the second threaded members 55. The coupling member 38 is then adapted to be moved away from the second half part 26 upon action of the positioning actuator 37, so as to facilitate the access to the proximal end 29 of the central shaft 28.

The operator can therefore easily reach the first threaded members 44 and cause the disengagement thereof from the fixing elements carried by the mandrel 41.

Upon completed disengagement, the active shaping drum 22 is therefore disconnected from the bearing assembly 21, and it can be moved away from the same upon action of the manipulator 18 which provides to position it on one of the supports 24 provided in the storage station 23. The locking bolt 61 maintains the second half part 26 in the parking position, preventing undesired displacements thereof along the central shaft 28 even when the shaping drum 22 is oriented according to a tilted or vertical axis, so as to facilitate the movement thereof by the manipulator 18.

The same manipulator 18 provides to pick up one of the waiting shaping drums 22 from the storage station 23 by engaging it at the respective distal end 30, in order to allow the engagement thereof on the bearing assembly 21 in replacement of that previously removed. Upon pick-up, the waiting shaping drum 22 will have the respective second half part 26 fixed in the parking position by means of the locking bolt 61. This circumstance ensures that the centre of gravity of the waiting shaping drum 22 is close to the distal end 30 thereof, conveniently limiting the stresses on the manipulator 18.

The operation of engaging the waiting shaping drum 22 on the bearing assembly 21 will be executed, with a reverse operating sequence with respect to that described above for the disengagement from the preceding active shaping drum 22.

After the proximal end 29 of the waiting shaping drum 22 has approached and been axially inserted in the coupling seat 41a by means of the manipulator 18, the first threaded members 44 are tightened. Upon completed fixing, a rotation of the shaping drum around the axis thereof, which can be manually carried out or carried out by means of the motor 42 of the mandrel 41, allows the sensor 51 to capture the presence in the correct working position of the head enlargements 48a of each fixing element 48, and give permission for the continuation of the mounting sequence.

The positioning actuator 37 carries the terminal counter-flange 39 adjacent to the coupling ring 54 in order to allow the mechanical connection thereof with the second half part 26 by means of the coupling 53. Upon command of the positioning actuator 37 - upon uncoupling of the locking bolt 61 - the second half part 26 can then be moved along the central shaft 28 from the parking position.

Upon completed fixing of the central shaft 28 and of the second half part 26 to the bearing assembly 21, the manipulator 18 can be disengaged from the distal end 30 of the central shaft 28. Suitable shifting of the carriage 35 and/or of the positioning actuator 37 managed by means of the electronic control unit situate the half parts 25, 26 in a stationing position at a pre-established mutual axial distance, in order to initiate a new shaping cycle.

## Claims

1. Process for replacing shaping drums in an assembling machine (1) of tyres for vehicle wheels,
wherein each of said shaping drums (22) comprises:
a central shaft (28) having a proximal end (29) and a distal end (30);
a first half part (25) fixed in proximity to one between the distal end (30) and the proximal end (29);
a second half part (26) slidingly engaged along the central shaft (28) and movable along the latter starting from a parking position of minimum distance from the first half part (25);
at least one waiting shaping drum (22) at a storage station (23), and an active shaping drum (22) on a bearing assembly (21) of the assembling machine (1), being distinguishable among said shaping drums (22);
wherein the waiting shaping drum (22) is replaced with the active shaping drum (22) by:
engaging the distal end (30) of the central shaft (28) of the active shaping drum (22) by means of a manipulator (18);
shifting the second half part (26) of the active shaping drum (22) along the central shaft (28) up to the parking position;
disengaging the active shaping drum (22) from the bearing assembly (21);
engaging the waiting shaping drum (22) to the bearing assembly (21), in place of the active shaping drum (22) previously removed from the bearing assembly (21).

2. Process according to claim 1, wherein the action of shifting the second half part (26) of the active shaping drum (22) along the central shaft (28) up to the parking position is carried out by a positioning actuator (37) forming part of the bearing assembly (21).

3. Process according to claim 1 or 2, wherein disengaging the active shaping drum (22) from the bearing assembly (21) comprises:
disengaging the positioning actuator (37) from the second half part (26) of the active shaping drum (22) in the parking position;
disengaging the proximal end (29) of the active shaping drum (22) from the bearing assembly (21).

4. Process according to one or more of the preceding claims, wherein engaging the waiting shaping drum (22) to the bearing assembly (21) comprises:
engaging, by said manipulator (18), the distal end (30) of the central shaft (28) of the waiting shaping drum (22) with the respective second half part (26) arranged in the parking position;
by said manipulator (18), bringing the proximal end (29) of the waiting shaping drum (22) close to a coupling seat (41a) carried by the bearing assembly (21);
fixing said proximal end (29) to the coupling seat (41a);
engaging the positioning actuator (37) to the second half part (26) of the waiting shaping drum (22);
disengaging the manipulator (18) from the distal end (30) of the central shaft (28) of the waiting shaping drum (22).

5. Process as claimed in one or more of the preceding claims, further comprising:
i) making a carcass sleeve (14), comprising at least one carcass ply (5) having axially opposite end flaps (5a) engaged with respective annular reinforcing structures (7);
ii) making an outer sleeve (17) comprising at least one belt structure (9);
iii) engaging the carcass sleeve (14) on the active shaping drum (22);
iv) engaging the outer sleeve (17) with a stationary annular transfer member (19), positioned coaxially to the active shaping drum (22);
v) axially moving the active shaping drum (22), to insert the carcass sleeve (14) in an axially centred position with respect to an axial centre line plane (M) of the outer sleeve (17) carried by the annular transfer member (19);
vi) subsequently moving the second half part (26) of the active shaping drum (22) along the central shaft (28) towards the axial centre line plane (M), while the central shaft (28) shifts axially to move the first half part (25) towards the axial centre line plane (M);
wherein the second half part (26) shifts with respect to the central shaft (28) according to axial displacements having a double extent with respect to the shifting of the first half part (25).

6. Assembling machine for building tyres for vehicle wheels, comprising:
a bearing assembly (21);
a plurality of shaping drums (22), individually and alternately engageable to the bearing assembly (21);
a storage station (23) having a plurality of supports (24) each configured for engaging one of said shaping drums (22);
one or more waiting drums in at the storage station (23), and one active shaping drum (22) on the bearing assembly (21) being distinguishable among said plurality of shaping drums (22);
at least one manipulator (18) configured for picking up one of the waiting drums from the storage station (23) and repositioning the active shaping drum (22) in the storage station (23);
wherein each of said shaping drums (22) comprises:
a central shaft (28) having a proximal end (29) and a distal end (30);
a first half part (25) fixed in proximity to one of said proximal (29) and distal (30) ends;
a second half part (26) slidingly engaged along the central shaft (28);
wherein the active shaping drum (22) is cantilevered to the bearing assembly (21), at the proximal end (29) of its central shaft (28);
wherein the manipulator (18) is configured for engaging the distal end (30) of the central shaft (28) of the active shaping drum (22);
wherein the bearing assembly (21) comprises a positioning actuator (37) configured for operating on the active shaping drum (22), to move the second half part (26) along the central shaft (28).

7. Machine according to claim 6, wherein said first half part (25) is fixed in proximity to the distal end (30) of the central shaft (28).

8. Machine according to claim 6 or 7, wherein the bearing assembly (21) comprises:
a linear guide (34);
a carriage (35) movable along the linear guide (34) and configured for engaging the central shaft (28) of the active shaping drum (22) at the respective proximal end (29).

9. Machine according to claim 8, wherein the positioning actuator (37) is fixed to the carriage (35).

10. Machine according to one or more of claim 8 or 9, wherein the carriage (35) is configured for positioning the active shaping drum (22) at a working position axially centred with respect to an annular transfer member (19).

11. Machine according to claim 10, wherein the manipulator (18) is configured for engaging an auxiliary drum (16) and placing it at a position coaxially centred inside the annular transfer member (19).

12. Machine according to one or more of claims 6 to 11, wherein the proximal end (29) of each shaping drum (22) is engageable with a mandrel (41) operatively housed in the bearing assembly (21).

13. Machine according to one or more of claims 6 to 12, wherein the central shaft (28) of each shaping drum (22) carries a proximal flange (43) rigidly engageable with the bearing assembly (21).

14. Machine according to one or more of claims 6 to 13, wherein the positioning actuator (37) comprises a coupling member (38) configured for engaging the second half part (26) of the active shaping drum (22) to move it along the central shaft (28).

15. Machine according to claim 13 or 14, wherein the central shaft (28) of each shaping drum (22) carries a distal flange (31) rigidly engaging the first half part (25), wherein the proximal flange (43) has a larger diametric dimension than a diametric dimension of the distal flange (31).

## Patentansprüche

1. Verfahren zum Auswechseln von Formtrommeln in einer Montagemaschine (1) von Reifen für Fahrzeugräder,
wobei jede der Formtrommeln (22) umfasst:
eine zentrale Welle (28) mit einem proximalen Ende (29) und einem distalen Ende (30);
einen ersten Halbteil (25), der in der Nähe des distalen Endes (30) und des proximalen Endes (29) befestigt ist;
einen zweiten Halbteil (26), der gleitend entlang der zentralen Welle (28) in Eingriff steht und ausgehend von einer Parkposition mit minimalem Abstand zu dem ersten Halbteil (25) entlang dieser beweglich ist;
wenigstens eine wartende Formtrommel (22) in einer Lagerstation (23) und eine aktive Formtrommel (22) auf einer Lagerbaugruppe (21) der Montagemaschine (1), die von den Formtrommeln (22) unterscheidbar ist;
wobei die wartende Formtrommel (22) durch die aktive Formtrommel (22) ersetzt wird durch:
Eingreifen in das distale Ende (30) der zentralen Welle (28) der aktiven Formtrommel (22) mit Hilfe eines Manipulators (18);
Verschieben des zweiten Halbteils (26) der aktiven Formtrommel (22) entlang der zentralen Welle (28) bis in die Parkposition;
Lösen der aktiven Formtrommel (22) aus der Lagerbaugruppe (21);
Eingreifen der wartenden Formtrommel (22) in die Lagerbaugruppe (21) anstelle der zuvor von der Lagerbaugruppe (21) entfernten aktiven Formtrommel (22).

2. Verfahren nach Anspruch 1, wobei die Aktion des Verschiebens des zweiten Halbteils (26) der aktiven Formtrommel (22) entlang der zentralen Welle (28) bis zu der Parkposition durch einen Positionierungsaktuator (37) ausgeführt wird, der Teil der Lagerbaugruppe (21) ausbildet.

3. Verfahren nach Anspruch 1 oder 2, wobei das Lösen der aktiven Formtrommel (22) von der Lagerbaugruppe (21) umfasst:
Lösen des Positionierungsaktuators (37) von dem zweiten Halbteil (26) der aktiven Formtrommel (22) in der Parkposition;
Lösen des proximalen Endes (29) der aktiven Formtrommel (22) von der Lagerbaugruppe (21).

4. Verfahren nach einem oder mehreren der vorhergehenden Ansprüche, wobei das Eingreifen der wartenden Formtrommel (22) in die Lagerbaugruppe (21) umfasst:
Ineingriffbringen durch den Manipulator (18) des distalen Endes (30) der zentralen Welle (28) der wartenden Formtrommel (22) mit dem jeweiligen zweiten Halbteil (26), der in der Parkposition angeordnet ist;
Bringen durch den Manipulator (18) des proximalen Endes (29) der wartenden Formtrommel (22) in die Nähe eines Kupplungssitzes (41a), der von der Lagerbaugruppe (21) getragen wird;
Befestigen des proximalen Endes (29) an dem Kupplungssitz (41a);
Eingreifen des Positionierungsaktuators (37) in den zweiten Halbteil (26) der wartenden Formtrommel (22);
Lösen des Manipulators (18) von dem distalen Ende (30) der zentralen Welle (28) der wartenden Formtrommel (22).

5. Verfahren nach einem oder mehreren der vorhergehenden Ansprüche, ferner umfassend:
i) Herstellen einer Karkassenhülse (14), die wenigstens eine Karkassenlage (5) mit axial gegenüberliegenden Endklappen (5a) aufweist, die in jeweilige ringförmige Verstärkungsstrukturen (7) eingreift;
ii) Herstellen einer äußeren Hülse (17), die wenigstens eine Gürtelstruktur (9) umfasst;
iii) Ineingriffbringen der Karkassenhülse (14) auf der aktiven Formtrommel (22);
iv) Ineingriffbringen der äußeren Hülse (17) mit einem stationären ringförmigen Übertragungselement (19), das koaxial zu der aktiven Formtrommel (22) positioniert ist;
v) axiales Bewegen der aktiven Formtrommel (22), um die Karkassenhülse (14) in eine axial zentrierte Position in Bezug auf eine axiale Mittellinienebene (M) der äußeren Hülse (17) einzusetzen, die von dem ringförmigen Übertragungselement (19) getragen wird;
vi) anschließendes Bewegen des zweiten Halbteils (26) der aktiven Formtrommel (22) entlang der zentralen Welle (28) in Richtung der axialen Mittellinienebene (M), während sich die zentrale Welle (28) axial verschiebt, um den ersten Halbteil (25) in Richtung der axialen Mittellinienebene (M) zu bewegen;
wobei sich der zweite Halbteil (26) in Bezug auf die zentrale Welle (28) gemäß axialer Verschiebungen verschiebt, die ein doppeltes Ausmaß in Bezug auf die Verschiebung des ersten Halbteils (25) aufweisen.

6. Montagemaschine zum Herstellen von Reifen für Fahrzeugräder, umfassend:
eine Lagerbaugruppe (21);
eine Mehrzahl von Formtrommeln (22), die einzeln und abwechselnd mit der Lagerbaugruppe (21) in Eingriff gebracht werden können;
eine Speicherstation (23) mit einer Mehrzahl von Stützen (24), die jeweils für den Eingriff mit einer der Formtrommeln (22) konfiguriert sind;
eine oder mehrere wartende Trommeln in der Lagerstation (23) und eine aktive Formtrommel (22) auf der Lagerbaugruppe (21), die von der Mehrzahl der Formtrommeln (22) unterscheidbar ist;
wenigstens einen Manipulator (18), der dazu konfiguriert ist, eine der wartenden Trommeln aus der Speicherstation (23) aufzunehmen und die aktive Formtrommel (22) wieder in der Speicherstation (23) zu positionieren;
wobei jede der Formtrommeln (22) umfasst:
eine zentrale Welle (28) mit einem proximalen Ende (29) und einem distalen Ende (30);
einen ersten Halbteil (25), der in der Nähe des proximalen (29) oder distalen (30) Endes befestigt ist;
einen zweiten Halbteil (26), der gleitend auf der zentralen Welle (28) in Eingriff steht;
wobei die aktive Formtrommel (22) an dem proximalen Ende (29) ihrer zentralen Welle (28) an der Lagerbaugruppe (21) freitragend angebracht ist;
wobei der Manipulator (18) zum Eingreifen in das distale Ende (30) der zentralen Welle (28) der aktiven Formtrommel (22) konfiguriert ist;
wobei die Lagerbaugruppe (21) einen Positionierungsaktuator (37) umfasst, der dazu konfiguriert ist, auf der aktiven Formtrommel (22) zu betrieben zu werden, um den zweiten Halbteil (26) entlang der zentralen Welle (28) zu bewegen.

7. Maschine nach Anspruch 6, wobei der erste Halbteil (25) in der Nähe des distalen Endes (30) der zentralen Welle (28) befestigt ist.

8. Maschine nach Anspruch 6 oder 7, wobei die Lagerbaugruppe (21) umfasst:
eine lineare Führung (34);
einen Schlitten (35), der entlang der linearen Führung (34) beweglich ist und dazu konfiguriert ist, in die zentrale Welle (28) der aktiven Formtrommel (22) an dem jeweiligen proximalen Ende (29) einzugreifen.

9. Maschine nach Anspruch 8, wobei der Positionierungsaktuator (37) an dem Schlitten (35) befestigt ist.

10. Maschine nach einem oder mehreren der Ansprüche 8 oder 9, wobei der Schlitten (35) dazu konfiguriert ist, die aktive Formtrommel (22) in einer Arbeitsposition zu positionieren, die in Bezug auf ein ringförmiges Übertragungselement (19) axial zentriert ist.

11. Maschine nach Anspruch 10, wobei der Manipulator (18) dazu konfiguriert ist, in eine Hilfstrommel (16) einzugreifen und diese in einer koaxial zentrierten Position innerhalb des ringförmigen Übertragungselements (19) zu platzieren.

12. Maschine nach einem oder mehreren der Ansprüche 6 bis 11, wobei das proximale Ende (29) jeder Formtrommel (22) mit einem Dorn (41) in Eingriff gebracht werden kann, der betriebsfähig in der Lagerbaugruppe (21) untergebracht ist.

13. Maschine nach einem oder mehreren der Ansprüche 6 bis 12, wobei die zentrale Welle (28) jeder Formtrommel (22) einen proximalen Flansch (43) trägt, der starr mit der Lagereinheit (21) in Eingriff gebracht werden kann.

14. Maschine nach einem oder mehreren der Ansprüche 6 bis 13, wobei der Positionierungsaktuator (37) ein Kopplungselement (38) umfasst, das dazu konfiguriert ist, in den zweiten Halbteil (26) der aktiven Formtrommel (22) einzugreifen, um ihn entlang der zentralen Welle (28) zu bewegen.

15. Maschine nach Anspruch 13 oder 14, wobei die zentrale Welle (28) jeder Formtrommel (22) einen distalen Flansch (31) trägt, der starr mit dem ersten Halbteil (25) in Eingriff steht, wobei der proximale Flansch (43) eine größere diametrale Abmessung als eine diametrale Abmessung des distalen Flansches (31) aufweist.

## Revendications

1. Procédé de remplacement de tambours de façonnage dans une machine d'assemblage (1) de pneumatiques pour roues de véhicule,
dans lequel chacun desdits tambours de façonnage (22) comprend :
un arbre central (28) ayant une extrémité proximale (29) et une extrémité distale (30) ;
une première demi-partie (25) fixée à proximité de celle située entre l'extrémité distale (30) et l'extrémité proximale (29) ;
une seconde demi-partie (26) engagée de manière coulissante le long de l'arbre central (28) et mobile le long de ce dernier à partir d'une position de stationnement de distance minimale par rapport à la première demi-partie (25) ;
au moins un tambour de façonnage en attente (22) au niveau d'un poste de stockage (23), et un tambour de façonnage actif (22) sur un ensemble palier (21) de la machine d'assemblage (1), se distinguant parmi lesdits tambours de façonnage (22) ;
dans lequel le tambour de façonnage en attente (22) est remplacé par le tambour de façonnage actif (22) par :
l'engagement de l'extrémité distale (30) de l'arbre central (28) du tambour de façonnage actif (22) au moyen d'un manipulateur (18) ;
le déplacement de la seconde demi-partie (26) du tambour de façonnage actif (22) le long de l'arbre central (28) jusqu'à la position de stationnement ;
le désengagement du tambour de façonnage actif (22) de l'ensemble de roulement (21) ;
l'engagement du tambour de façonnage en attente (22) sur l'ensemble palier (21), à la place du tambour de façonnage actif (22) préalablement retiré de l'ensemble palier (21).

2. Procédé selon la revendication 1, dans lequel l'action de déplacement de la seconde demi-partie (26) du tambour de façonnage actif (22) le long de l'arbre central (28) jusqu'à la position de stationnement est réalisé par un actionneur de positionnement (37) faisant partie de l'ensemble palier (21).

3. Procédé selon la revendication 1 ou 2, dans lequel le désengagement du tambour de façonnage actif (22) de l'ensemble palier (21) comprend :
le désengagement de l'actionneur de positionnement (37) de la seconde demi-partie (26) du tambour de façonnage actif (22) dans la position de stationnement ;
le désengagement de l'extrémité proximale (29) du tambour de façonnage actif (22) de l'ensemble palier (21).

4. Procédé selon l'une quelconque des revendications précédentes, dans lequel l'engagement du tambour de façonnage en attente (22) sur l'ensemble palier (21) comprend :
l'engagement, par ledit manipulateur (18), de l'extrémité distale (30) de l'arbre central (28) du tambour de façonnage en attente (22) avec la seconde demi-partie respective (26) agencée en position de stationnement ;
par ledit manipulateur (18), le rapprochement de l'extrémité proximale (29) du tambour de façonnage en attente (22) d'un siège d'accouplement (41a) porté par l'ensemble palier (21) ;
la fixation de ladite extrémité proximale (29) au siège d'accouplement (41a) ;
l'engagement de l'actionneur de positionnement (37) sur la seconde demi-partie (26) du tambour de façonnage en attente (22) ;
le désengagement du manipulateur (18) de l'extrémité distale (30) de l'arbre central (28) du tambour de façonnage en attente (22).

5. Procédé selon l'une quelconque des revendications précédentes, comprenant en outre :
i) la fabrication d'un manchon de carcasse (14), comprenant au moins une couche de carcasse (5) ayant des rabats d'extrémité axialement opposés (5a) en prise avec des structures de renforcement annulaires respectives (7) ;
ii) la fabrication d'un manchon externe (17) comprenant au moins une structure de ceinture (9) ;
iii) l'engagement du manchon de carcasse (14) sur le tambour de façonnage actif (22) ;
iv) l'engagement du manchon externe (17) avec un élément de transfert annulaire stationnaire (19), positionné coaxialement au tambour de façonnage actif (22) ;
v) le déplacement axial du tambour de façonnage actif (22), pour insérer le manchon de carcasse (14) dans une position axialement centrée par rapport à un plan médian axial (M) du manchon externe (17) porté par l'élément de transfert annulaire (19) ;
vi) le déplacement ensuite de la seconde demi-partie (26) du tambour de façonnage actif (22) le long de l'arbre central (28) vers le plan de la ligne centrale axiale (M), tandis que l'arbre central (28) se déplace axialement pour déplacer la première demi-partie (25) vers le plan de la ligne centrale axiale (M) ;
dans lequel la seconde demi-partie (26) se déplace par rapport à l'arbre central (28) selon des déplacements axiaux ayant une double étendue par rapport au déplacement de la première demi-partie (25).

6. Installation de construction de pneumatiques pour roues de véhicules,
comprenant :
un ensemble palier (21) ;
une pluralité de tambours de façonnage (22), pouvant s'engager individuellement et alternativement sur l'ensemble palier (21) ;
une station de stockage (23) ayant une pluralité de supports (24), chacun configuré pour engager l'un desdits tambours de façonnage (22) ;
un ou plusieurs tambours en attente au poste de stockage (23), et un tambour de façonnage actif (22) sur l'ensemble palier (21) pouvant être distingués parmi ladite pluralité de tambours de façonnage (22) ;
au moins un manipulateur (18) configuré pour récupérer l'un des tambours en attente depuis la station de stockage (23) et repositionner le tambour de façonnage actif (22) dans la station de stockage (23) ;
dans lequel chacun desdits tambours de façonnage (22) comprend :
un arbre central (28) ayant une extrémité proximale (29) et une extrémité distale (30) ;
une première demi-partie (25) fixée à proximité de l'une desdites extrémités proximale (29) et distale (30) ;
une seconde demi-partie (26) engagée de manière coulissante le long de l'arbre central (28) ;
dans lequel le tambour de façonnage actif (22) est en porte-à-faux par rapport à l'ensemble palier (21), au niveau de l'extrémité proximale (29) de son arbre central (28) ;
dans lequel le manipulateur (18) est configuré pour engager l'extrémité distale (30) de l'arbre central (28) du tambour de façonnage actif (22) ;
dans lequel l'ensemble palier (21) comprend un actionneur de positionnement (37) configuré pour fonctionner sur le tambour de façonnage actif (22), afin de déplacer la seconde demi-partie (26) le long de l'arbre central (28).

7. Machine selon la revendication 6, dans laquelle ladite première demi-partie (25) est fixée à proximité de l'extrémité distale (30) de l'arbre central (28).

8. Machine selon la revendication 6 ou 7, dans laquelle l'ensemble palier (21) comprend :
un guide linéaire (34) ;
un chariot (35) mobile le long du guide linéaire (34) et configuré pour engager l'arbre central (28) du tambour de façonnage actif (22) au niveau de l'extrémité proximale respective (29).

9. Machine selon la revendication 8, dans laquelle l'actionneur de positionnement (37) est fixé au chariot (35).

10. Machine selon l'une ou plusieurs des revendications 8 ou 9, dans laquelle le chariot (35) est configuré pour positionner le tambour de façonnage actif (22) à une position de travail axialement centrée par rapport à un élément de transfert annulaire (19).

11. Machine selon la revendication 10, dans laquelle le manipulateur (18) est configuré pour engager un tambour auxiliaire (16) et le placer dans une position coaxialement centrée à l'intérieur de l'élément de transfert annulaire (19).

12. Machine selon une ou plusieurs des revendications 6 à 11, dans laquelle l'extrémité proximale (29) de chaque tambour de façonnage (22) peut s'engager avec un mandrin (41) logé de manière fonctionnelle dans l'ensemble palier (21).

13. Machine selon une ou plusieurs des revendications 6 à 12, dans laquelle l'arbre central (28) de chaque tambour de façonnage (22) porte une bride proximale (43) pouvant s'engager rigidement avec l'ensemble palier (21).

14. Machine selon une ou plusieurs des revendications 6 à 13, dans laquelle l'actionneur de positionnement (37) comprend un élément de couplage (38) configuré pour engager la seconde demi-partie (26) du tambour de façonnage actif (22) pour le déplacer le long l'arbre central (28).

15. Machine selon la revendication 13 ou 14, dans laquelle l'arbre central (28) de chaque tambour de façonnage (22) porte une bride distale (31) engageant rigidement la première demi-partie (25), dans laquelle la bride proximale (43) présente un une dimension diamétrale plus grande qu'une dimension diamétrale de la bride distale (31).
